(19) Europäisches Patentamt
European Patent Office
Office européen des brevets

(11) Publication number: 0 232 504 B1

(12) # EUROPEAN PATENT SPECIFICATION

(45) Date of publication of patent specification: 05.09.90

(21) Application number: 86117038.9

(22) Date of filing: 08.12.86

(51) Int. Cl.[5]: A 01 N 43/56, A 01 N 57/20 // (A01N43/56, 43:40),(A01N57/20, 43:56)

(54) Herbicidal composition.

(30) Priority: 10.12.85 JP 278589/85
11.12.85 JP 278466/85
20.10.86 JP 250158/86

(43) Date of publication of application:
19.08.87 Bulletin 87/34

(45) Publication of the grant of the patent:
05.09.90 Bulletin 90/36

(84) Designated Contracting States:
DE FR GB IT SE

(56) References cited:
EP-A-0 105 721

(73) Proprietor: SUMITOMO CHEMICAL COMPANY, LIMITED
Kitahama 4-chome 5-33
Chuo-ku Osaka 541 (JP)

(72) Inventor: Takase, Masayuki
14-7, Mefu 2-chome
Takarazuka-shi Hyogo-ken (JP)
Inventor: Yoshida, Ryo
5-19, Azajizoyama Higashiuneno
Kawanishi-shi Hyogo-ken (JP)

(74) Representative: Vossius & Partner
Siebertstrasse 4 P.O. Box 86 07 67
D-8000 München 86 (DE)

EP 0 232 504 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Courier Press, Leamington Spa, England.

**Description**

The present invention relates to a herbicidal composition. More particularly, it relates to a herbicidal composition comprising as the active ingredients (a) 3-chloro-2-(4-chloro-2-fluoro-5-propargyloxyphenyl)-4,5,6,7-tetrahydro-2H-indazole (hereinafter referred to as "Compound (I)") of the formula:

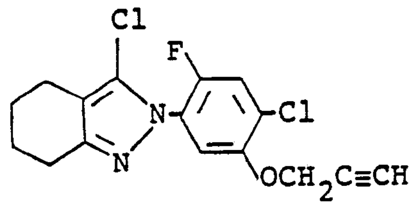

(I)

and (b) at least one of N-(phosphonomethyl)glycine of the formula:

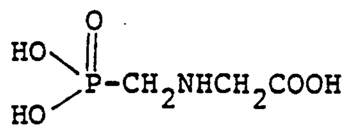

(II-1)

or its salt (hereinafter referred to as "glyphosate"), *DL*-homoalanin-4-yl(methyl)phosphinic acid of the formula:

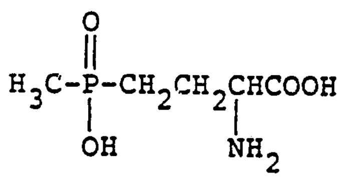

(II-2)

or its salt (hereinafter referred to as "glufosinate"), and 2-amino-4-[(hydroxy)(methyl)phosphionyl]-butyrylalanylalanine of the formula:

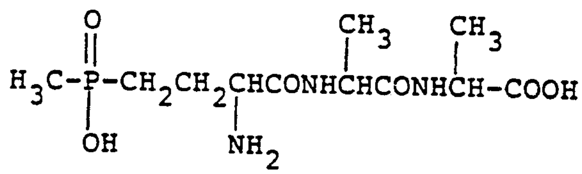

(II-3)

or its salt (hereinafter referred to as "bialaphos"), which exerts a highly enhanced herbicidal activity against a wide variety of weeds without causing any material phytotoxicity to crop plants.

In recent years, there have been used a great number of chemicals having herbicidal activities in order to exterminate or control undesired vegetation of weeds in agricultural and non-agricultural fields. Since, however, weeds are diversified in kinds and grow over a long period of time, the herbicidal effects of conventional herbicidal agents are restricted in general. Under the circumstances, the appearance of any herbicidal agent exerting a strong herbicidal activity as well as a broad herbicidal spectrum over a wide variety of weeds has been highly demanded.

As a result of the extensive study, it has now been found that the associated use of (a) Compound (I) with (b) at least one of glyphosate (II—1), glufosinate (II—2), and bialaphos (II—3), these being hereinafter referred to as "Compounds (II)"), produces a highly enhanced herbicidal activity against a wide variety of weeds in agricultural and non-agricultural fields. In comparison with the sole use of each of said active ingredients, enhancement of the herbicidal potency on such associated use is remarkable so that the active ingredients may be applied in smaller dosages. Further, the weed-control spectrum is greatly enlarged. Thus, a clear and definite synergistic effect is observed in said associated use.

The herbicidal composition of the invention can exterminate or control a variety of weeds, of which typical examples are broad-leaved weeds such as wild buckwheat (*Polygonum convolvulus*), pale smartweed (*Polygonum lapathifolium*), common purslane (*Portulaca oleracea*), common chickweed (*Stellaria media*), common lambsquarters (*Chenopodium album*), redroot pigweed (*Amaranthus retroflexus*), radish (*Raphanus sativus*), wild mustard (*Sinapis arvensis*), shepherdspurse (*Capsella bursa-pastoris*), hemp sesbania (*Sesbania exaltata*), sicklepod (*Cassia obtusifolia*), velvetleaf (*Abutilon theophrasti*), prickly sida (*Sida spinosa*), field pansy (*Viola arvensis*), cleavers (*Galium aparine*), ivyleaf morningglory (*Ipomoea hederacea*), tall morningglory (*Pharbitis purpurea*), field bindweed (*Convolvulus arvensis*), purple deadnettle (*Lamium purpurum*), henbit (*Lamium amplexicaure*), jimsonweed (*Datura

*stramonium*), black nightshade (*Solanum nigrum*), persian speedwell (*Veronica persica*), common cocklebur (*Xanthium strumarium*), common sunflower (*Helianthus annuus*), scentless chamomile (*Matricaria perforata*), corn marigold (*Chrysanthemum segetum*), curly dock (*Rumex crispus*) and Japanese mugwort (*Artemisia princeps*); graminaceous weeds such as japanese millet (*Echinochloa frumentacea*), barnyardgrass (*Echinochloa crus-galli*), green foxtail (*Setaria viridis*), large crabgrass (*Digitaria sanguinalis*), annual bluegrass (*Poa annua*), water foxtail (*Alopecurus geniculatus*), blackgrass (*Alopecurus myosuroides*), oats (*Avena sativa*), wild oats (*Avena fatua*), johnsongrass (*Sorghum halepense*), quackgrass (*Agropyron repens*), downy brome (*Bromus tectorum*) and bermudagrass (*Cynodon dactylon*); commelinaceous weeds such as asiatic dayflower (*Commelina communis*); cyperaceous weeds such as rice flatsedge (*Cyperus iria*) and purple nutsedge (*Cyperus rotundus*), etc.

Compound (I) is known to exert a herbicidal activity (EP—0105721A). Glyphosate (II—1) is described in C.R. Worthing et al: The Pesticide Mannual, 7th Ed., page 303 (1983) published by The British Crop Protection Council and known as a herbicide. As the salt, there may be exemplified isopropylamine salt, etc. Glufosinate (II—2) is described in C.R. Worthing et al: The Pesticide Mannual, 7th Ed., page 302 (1983) and known as a herbicide. As the salt, there may be used ammonium salt, etc. Bialaphos (II—3) is described in Hodogaya Chemical Co., Ltd.: Short Review of Herbicide, page 222 (1986) and known as a herbicide. As the salt, there may be used sodium salt, etc. However, the associated use of Compound (I) with any of Compounds (II) has never been attempted, and the production of said synergistic effect on such associated use has never been expected.

The proportion of Compound (I) as the component (a) and Compound(s) (II) as the component (b) in the composition of the invention may vary in a considerably broad range and is usually within a range of 1:0.1 to 1:100 by weight. When Compound (II) is glyphosate (II—1), its amount is preferably from 0.25 to 64 parts by weight, especially from 1 to 32 parts by weight, to one part by weight of Compound (I). When glufosinate (II—2) is used as Compound (II), its amount is favorably from 0.2 to 100 parts by weight, particularly from 0.4 to 70 parts by weight, to one part by weight of Compound (I). In case of Compound (II) being bialaphos (II—3), it may be used preferably in an amount of from 0.2 to 100 parts by weight, especially from 0.4 to 70 parts by weight, to one part by weight of Compound (I).

In addition to the above active ingredients, the composition may contain a solid or liquid carrier or diluent. Any surface active or auxiliary agent may be also contained therein. Thus, the composition may be formulated in any conventional preparation form such as emulsifiable concentrate, wettable powder or suspension. The total content of the active ingredients, i.e. Compound (I) and Compound(s) (II), may be from 1 to 90% by weight, preferably from 2 to 80% by weight.

As the solid carrier or diluent, there may be used kaolin clay, attapulgite clay, bentonite, terra alba, pyrophyllite, talc, diatomaceous earth, calcite, wallnut-shell powder, urea, ammonium sulfate, synthetic hydrated silica, etc. Examples of the liquid carrier or diluent are aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton-seed oil), dimethylsulfoxide, acetonitrile, water, etc.

The surface active agent used for emulsification, dispersion or spreading may be any of the anionic and non-ionic type of agents. Examples of the surface active agent include alkylsulfates, alkylarylsulfonates, dialkylsulfosuccinates, phosphates of polyoxyethylenealkylaryl ethers, polyoxyethylene alkyl ethers, polyoxyethylene alkylaryl ethers, polyoxyethylene polyoxypropylene block copolymers, sorbitan fatty acid esters, polyoxyethylene sorbitan fatty acid esters, etc. Examples of the auxiliary agents include ligninsulfonates, sodium alginate, polyvinyl alcohol, gum arabic, CMC (carboxymethyl cellulose), PAP (isopropyl acid phosphate), etc.

Practical embodiments of the composition are illustratively shown in the following Formulation Examples wherein part(s) are by weight.

Formulation Example 1

Twenty-five parts of Compound (I), 25 parts of glyphosate (isopropylamine salt), 3 parts of calcium ligninsulfonate, 2 parts of sodium laurylsulfate and 45 parts of synthetic hydrated silica are well mixed and pulverized to obtain a wettable powder.

Formulation Example 2

Five parts of Compound (I), 20 parts of glyphosate (isopropylamine salt), 3 parts of polyoxyethylene sorbitan monooleate, 3 parts of CMC and 69 parts of water are mixed and pulverized until the particle size becomes less than 5 microns to make a suspension.

Formulation Example 3

Twenty-five parts of Compound (I), 25 parts of glufosinate (ammonium salt), 3 parts of calcium ligninsulfonate, 2 parts of sodium laurylsulfate and 45 parts of synthetic hydrated silica are well mixed and pulverized to obtain a wettable powder.

Formulation Example 4

Ten parts of Compound (I), 15 parts of glufosinate (ammonium salt), 3 parts of polyoxyethylene

sorbitan monooleate, 3 parts of CMC and 69 parts of water are mixed and pulverized until the particle size becomes less than 5 microns to make a suspension.

Formulation Example 5

Twenty-five parts of Compound (I), 25 parts of bialaphos (sodium salt), 3 parts of calcium ligninsulfonate, 2 parts of sodium laurylsulfate and 45 parts of synthetic hydrated silica are well mixed and pulverized to obtain a wettable powder.

Formulation Example 6

Ten parts of Compound (I), 15 parts of bialaphos (sodium salt), 3 parts of polyoxyethylene sorbitan monooleate, 3 parts of CMC and 69 parts of water are mixed and pulverized until the particle size becomes less than 5 microns to make a suspension.

A composition comprising Compound (I) and Compound(s) (II) thus formulated is useful for post-emergence control of undesired weeds by foliar treatment. The foliar treatment may be effected by spraying the composition containing Compound (I) and Compound(s) (II) over the top of plants. The direct application may also be adopted.

In order to improve the herbicidal activity, the composition may be used with other herbicides. Besides, it may be used in combination with insecticides, acaricides, nematocides, fungicides, plant growth regulators, fertilizers, soil improvers, etc.

The composition of the invention is widely used as the herbicide applicable in plowed field, non-cropping land, orchards, pasture land, lawn, forest, non-agricultural fields, etc.

The dosage of the active ingredients may vary depending on prevailing weather conditions, soil involved, formulation used, mixing proportion of each active ingredient, crop and weed species, etc. In general, however, the total amount of Compound (I) and Compound(s) (II) may be within a range of about 1 to 100 grams per are. When Compound (II) is glyphosate (II—1), said total amount is preferred to be from about 2 to 50 grams per are, especially from about 2 to 25 grams per are. When Compound (II) is glufosinate (II—2), said total amount may be favorably from about 1 to 100 grams per are, particularly from about 2 to 60 grams per are. When Compound (II) is bialaphos (II—3), said total amount is preferred to be from about 1 to 100 grams per are, especially from about 2 to 60 grams per are.

In case of the composition being in the form of emulsifiable concentrate, wettable powder, suspension or the like, it is normally diluted with water and applied over the top at a volume of about 1 to 10 liters per are to the foliage of the crop plants or weeds which germinate or have germinated. The dilution may include, in addition to the above mentioned surface active agent, any spreading or auxiliary agent such as polyoxyethylene resin acid esters, ligninsulfonates, abietic acid, dinaphthylmethanedisulfonates, paraffin and the like.

The herbicidal activity of the composition of the invention will be explained in further detail with reference to the following Test Examples wherein the growth control percentage (%) was determined by weighing the aerial parts of the test plants (fresh weight) and making calculation according to the following equation:

$$\text{Growth controlling percentage (\%)} \quad 1 = \left\{ 1 - \frac{\text{Fresh weight of test plant in treated plot}}{\text{Fresh weight of test plant in untreated plot}} \right\} \times 100$$

Test Example 1

Tubers of purple nutsedge were transplanted in a vat (33 × 23 $cm^2$ (area), 11 cm (height)) filled with upland field soil and cultivated in a greenhouse for 35 days. A designated amount of the composition in the form of a wettable powder formulated according to the above Formulation Example was diluted with water containing a spreading agent and sprayed to the foliage of the test plants at a spray volume of 5 liters per are by the aid of a small hand sprayer. After 28 days' cultivation in the greenhouse, the growth control

percentage was observed. The results are shown in Table 1. At the time of treatment, the test plants were in general at 6 to 9-leaf stage and 20 to 40 cm in height.

Table 1

| Compound No. | Dosage (g/a) | Mixing ratio | Growth control percentage of purple nutsedge (%) |
|---|---|---|---|
| Compound (I) | 20 | - | 100 |
| | 10 | - | 80 |
| | 5 | - | 45 |
| | 2.5 | - | 20 |
| | 1.25 | - | 5 |
| Glyphosate (isopropyl-amine salt) (II-1) | 40 | - | 95 |
| | 20 | - | 60 |
| | 10 | - | 35 |
| | 5 | - | 15 |
| | 2.5 | - | 0 |
| Compound (I) + Glyphosate (isopropyl-amine salt) (II-1) | 10 + 20 | 1:2 | 100 |
| | 10 + 10 | 1:1 | 100 |
| | 10 + 5 | 2:1 | 100 |
| | 10 + 2.5 | 4:1 | 90 |
| | 5 + 20 | 1:4 | 100 |
| | 5 + 10 | 1:2 | 100 |
| | 5 + 5 | 1:1 | 95 |
| | 5 + 2.5 | 2:1 | 70 |
| | 2.5 + 20 | 1:8 | 100 |
| | 2.5 + 10 | 1:4 | 100 |
| | 2.5 + 5 | 1:2 | 70 |
| | 2.5 + 2.5 | 1:1 | 45 |
| | 1.25 + 20 | 1:16 | 100 |
| | 1.25 + 10 | 1:8 | 80 |
| | 1.25 + 5 | 1:4 | 60 |
| | 1.25 + 2.5 | 1:2 | 45 |

Test Example 2

Seeds of annual bluegrass were sowed in a Wagner's pot (16 cm (diameter), 19 cm (height)) filled with upland field soil and cultivated in a greenhouse for 35 days. A designated amount of the composition in the form of a wettable powder formulated according to the above Formulation Example was diluted with water containing a spreading agent and sprayed to the foliage of the test plants at a spray volume of 5 liters per are by the aid of a small hand sprayer. After 20 days' cultivation in the greenhouse, the growth control

percentage was observed. The results are shown in Table 2. At the time of treatment, the test plants were in general at 5 to 7-leaf stage and 20 to 30 cm in height.

Table 2

| Compound No. | Dosage (g/a) | Mixing ratio | Growth control percentage of annual blue-grass (%) |
|---|---|---|---|
| Compound (I) | 2.5 | - | 100 |
| | 1.25 | - | 91 |
| | 0.63 | - | 78 |
| | 0.32 | - | 61 |
| | 0.16 | - | 34 |
| Glufosinate (ammonium salt) (II-2) | 20 | - | 98 |
| | 10 | - | 89 |
| | 5 | - | 77 |
| | 2.5 | - | 51 |
| | 1.25 | - | 28 |
| Compound (I) + Glufosinate (ammonium salt) (II-2) | 1.25 + 10 | 1:8 | 100 |
| | 1.25 + 5 | 1:4 | 99 |
| | 1.25 + 2.5 | 1:2 | 96 |
| | 1.25 + 1.25 | 1:1 | 94 |
| | 0.63 + 10 | 1:16 | 100 |
| | 0.63 + 5 | 1:8 | 96 |
| | 0.63 + 2.5 | 1:4 | 92 |
| | 0.63 + 1.25 | 1:2 | 85 |
| | 0.32 + 10 | 1:32 | 98 |
| | 0.32 + 5 | 1:16 | 95 |
| | 0.32 + 2.5 | 1:8 | 86 |
| | 0.32 + 1.25 | 1:4 | 79 |
| | 0.16 + 10 | 1:64 | 99 |
| | 0.16 + 5 | 1:32 | 88 |
| | 0.16 + 2.5 | 1:16 | 81 |
| | 0.16 + 1.25 | 1:8 | 68 |

Test Example 3

Seeds of water foxtail were sowed in a Wagner's pot (16 cm (diameter), 19 cm (height)) filled with upland field soil and cultivated in a greenhouse for 35 days. A designated amount of the composition in the form of a wettable powder formulated according to the above Formulation Example was diluted with water containing a spreading agent and sprayed to the foliage of the test plants at a spray volume of 5 liters per are by the aid of a small hand sprayer. After 20 days' cultivation in the greenhouse, the growth control

percentage was observed. The results are shown in Table 3. At the time of treatment, the test plants were in general at 5 to 7-leaf stage and 10 to 15 cm in height.

Table 3

| Compound No. | Dosage (g/a) | Mixing ratio | Growth control percentage of water foxtail (%) |
|---|---|---|---|
| Compound (I) | 2.5 | - | 96 |
| | 1.25 | - | 88 |
| | 0.63 | - | 75 |
| | 0.32 | - | 60 |
| | 0.16 | - | 38 |
| Bialaphos (sodium salt) (II-3) | 20 | - | 94 |
| | 10 | - | 85 |
| | 5 | - | 70 |
| | 2.5 | - | 46 |
| | 1.25 | - | 24 |
| Compound (I) + Bialaphos (sodium salt) (II-3) | 1.25 + 10 | 1:8 | 100 |
| | 1.25 + 5 | 1:4 | 98 |
| | 1.25 + 2.5 | 1:2 | 94 |
| | 1.25 + 1.25 | 1:1 | 92 |
| | 0.63 + 10 | 1:16 | 100 |
| | 0.63 + 5 | 1:8 | 95 |
| | 0.63 + 2.5 | 1:4 | 88 |
| | 0.63 + 1.25 | 1:2 | 85 |
| | 0.32 + 10 | 1:32 | 99 |
| | 0.32 + 5 | 1:16 | 90 |
| | 0.32 + 2.5 | 1:8 | 84 |
| | 0.32 + 1.25 | 1:4 | 77 |
| | 0.16 + 10 | 1:64 | 95 |
| | 0.16 + 5 | 1:32 | 86 |
| | 0.16 + 2.5 | 1:16 | 78 |
| | 0.16 + 1.25 | 1:8 | 66 |

The results in Test Examples 1, 2 and 3 were analyzed according to the isobar (i.e. equivalent efficacy line) method [Vol. 3, Herbicides, pages 109—111 (1981) in "Noyaku Jikkenho" (methods in Pesticide Science) edited by Junichi Fukami et al, Soft Science Inc., Tokyo] based on the Tammes's method [Tammes, P.M.L.: Neth. J. Plant Path., *70*, 73—80 (1964)]. Namely, several combinations of the compositions having different mixing ratios of Compound (I) or glyphosate (II—1), glufosinate (II—2) or bialaphos (II—3) but exerting the same level of growth control effect, for example, 70% or 90% growth control, were plotted in a graph so as to readily determine a synergistic effect, an arithmetic effect or a competitive effect. In case of exhibiting the synergistic effect, the equivalent efficacy line as plotted is shown below the arithmetic efficacy line.

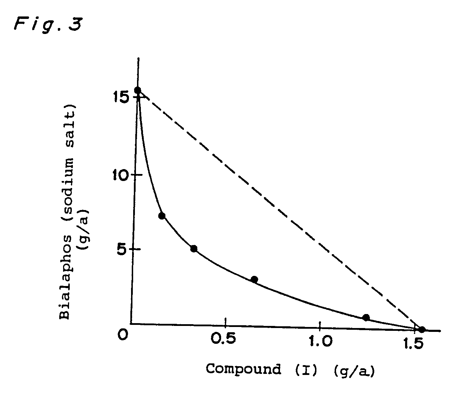

Explaining further in detail with reference to the accompanying drawings, Fig. 1 wherein the ordinate indicates the dosage of glyphosate (isopropylamine salt) and the abscissa indicates the dosage of Compound (I), the equivalent efficacy line (i.e. solid line) of 70% growth control of purple nutsedge is located under the arithmetic efficacy line (i.e. dotted line), from which it is understood that the associated use of Compound (I) and glyphosate (isopropylamine salt) (II—1) in a certain mixing ratio produces the synergistic effect; Fig. 2 wherein the ordinate indicates the dosage of glufosinate (ammonium salt) (II—2) and the abscissa indicates the dosage of Compound (I), the equivalent efficacy line (i.e. solid line) of 90% growth control of annual bluegrass is located under the arithmetic efficacy line (i.e. dotted line), from which it is understood that the associated use of Compound (I) and glufosinate (ammonium salt) (II—2) in a certain mixing ratio produces the synergistic effect; Fig. 3 wherein the ordinate indicates the dosage of

bialaphos (sodium salt) (II—3) and the abscissa indicates the dosage of Compound (I), the equivalent efficacy line (i.e. solid line) of 90% growth control of water foxtail is located under the arithmetic efficacy line (i.e. dotted line), from which it is understood that the associated use of Compound (I) and bialaphos (sodium salt) (II—3) in a certain mixing ratio produces the synergistic effect; likewise.

Test Example 4

Seeds of barnyardgrass (*Echinochloa crus-galli*), green foxtail, large crabgrass, tall morningglory, velvetleaf, sicklepod, hemp sesbania, prickly sida, black nightshade, common cocklebur and redroot pigweed were sowed in a vat (33 × 23 $cm^2$ (area), 11 cm (height)) filled with upland field soil, followed by cultivation in a greenhouse for 35 days. A designated amount of the composition in the form of a wettable powder formulated according to the above Formulation Example was diluted with water containing a spreading agent and sprayed to the foliage of the test plants at a spray volume of 5 liters per are by the aid of a small hand sprayer. After 28 days' cultivation in the greenhouse, the growth control percentage was observed. The results are shown in Table 4. At the time of treatment, the test plants were in general at 3 to 8-leaf stage and 5 to 60 cm in height, although the growing stage varied depending on each species.

Table 4

| Compound No. | Dosage (g/a) | Growth control percentage (%) | | | | | | | | | | |
|---|---|---|---|---|---|---|---|---|---|---|---|---|
| | | Barn-yard-grass | Green fox-tail | Large crab-grass | Tall morning-glory | Velvet-leaf | Sickle-pod | Hemp ses-bania | Prickly sida | Black night-shade | Common cock-lebur | Redroot pigweed |
| Compound (I) | 2.5<br>12.5 | 70<br>90 | 90<br>95 | 70<br>90 | 100<br>100 | 100<br>100 | 50<br>100 | 100<br>100 | 95<br>100 | 80<br>100 | 95<br>100 | 100<br>100 |
| Glyphosate (isopropyl-amine salt) (II-1) | 12.5 | 70 | 80 | 70 | 55 | 40 | 45 | 30 | 35 | 50 | 50 | 60 |
| Compound (I) + Glyphosate (isopropyl-amine salt) (II-1) | 2.5 + 10 | 100 | 100 | 100 | 100 | 100 | 100 | 100 | 100 | 100 | 100 | 100 |

Test Example 5

Seeds of barnyardgrass (*Echinochloa crus-galli*), green foxtail, large crabgrass, tall morningglory, velvetleaf, sicklepod, hemp sesbania, prickly sida, black nightshade, common cocklebur, common sunflower, common lambsquarters and redroot pigweed were sowed in a vat (33 × 23 $cm^2$ (area), 11 cm (height)) filled with upland field soil and rootstalks of johnsongrass were transplanted therein, followed by cultivation in a greenhouse for 35 days. A designated amount of the composition in the form of a wettable powder formulated according to the above Formulation Example was diluted with water containing a spreading agent and sprayed to the foliage of the test plants at a spray volume of 5 liters per are by the aid of a small hand sprayer. After 28 days' cultivation in the greenhouse, the growth control percentage was observed. The results are shown in Tables 5 and 6. At the time of treatment, the test plants were in general at 3 to 8-leaf stage and 5 to 60 cm in height, although the growing stage varied depending on each species.

Table 5

| Compound No. | Dosage (g/a) | Growth control percentage (%) | | | | | | | | | | | | | |
|---|---|---|---|---|---|---|---|---|---|---|---|---|---|---|---|
| | | Barn-yard-grass | Green fox-tail | Johnson-grass | Large crab-grass | Tall morning-glory | Velvet-leaf | Sickle-pod | Hemp ses-bania | Prickly sida | Black night-shade | Common cock-lebur | Common sun-flower | Common lambs-quarters | Redroot pigweed |
| Compound (I) | 2.5 | 70 | 90 | 50 | 70 | 100 | 100 | 50 | 100 | 95 | 80 | 95 | 80 | 85 | 100 |
| Glufosinate (ammonium salt) (II-2) | 5 | 65 | 95 | 60 | 75 | 100 | 80 | 45 | 85 | 80 | 85 | 85 | 80 | 85 | 75 |
| Compound (I) + Glufosinate (ammonium salt) (II-2) | 2.5 + 5 | 100 | 100 | 100 | 100 | 100 | 100 | 100 | 100 | 100 | 100 | 100 | 100 | 100 | 100 |

Table 6

| Compound No. | Dosage (g/a) | Growth control percentage (%) | | | | | | | | | | | | | |
|---|---|---|---|---|---|---|---|---|---|---|---|---|---|---|---|
| | | Barn-yard-grass | Green fox-tail | Johnson-grass | Large crab-grass | Tall morning-glory | Velvet-leaf | Sickle-pod | Hemp ses-bania | Prickly sida | Black night-shade | Common cock-lebur | Common sun-flower | Common lambs-quarters | Redroot pigweed |
| Compound (I) | 2.5 | 70 | 90 | 50 | 70 | 100 | 100 | 50 | 100 | 95 | 80 | 95 | 80 | 85 | 100 |
| Bialaphos (sodium salt) (II-3) | 5 | 50 | 100 | 60 | 75 | 100 | 80 | 45 | 85 | 80 | 85 | 85 | 80 | 85 | 75 |
| Compound (I) + Bialaphos (sodium salt) (II-3) | 2.5 + 5 | 100 | 100 | 100 | 100 | 100 | 100 | 100 | 100 | 100 | 100 | 100 | 100 | 100 | 100 |

## Claims

1. A herbicidal composition which comprises as the active ingredients (a) 3-chloro-2-(4-chloro-2-fluoro-5-propargyloxyphenyl)-4,5,6,7-tetrahydro-2H-indazole and (b) at least one of N-(phosphonomethyl)glycine and its salts (glyphosate), *DL*-homoalanin-4-yl(methyl)phosphinic acid and its salts (glufosinate), 2-amino-4-[(hydroxy)(methyl)phosphionyl]butyrylalanylalanine and its salts (bialaphos) and an inert carrier or diluent.

2. The composition according to claim 1, wherein the weight proportion of the components (a) and (b) is from 1:0.1 to 1:100.

3. The composition according to claim 2, wherein the component (b) is glyphosate, and the weight proportion of the components (a) and (b) is from 1:0.25 to 1:64.

4. The composition according to claim 2, wherein the component (b) is glufosinate, and the weight proportion of the components (a) and (b) is from 1:0.2 to 1:100.

5. The composition according to claim 2, wherein the component (b) is bialaphos, and the weight proportion of the components (a) and (b) is from 1:0.2 to 1:100.

6. A method for controlling weeds which comprises applying a herbicidally effective amount of the composition according to claim 1 to the weeds.

7. The method according to claim 6, wherein the total amount of the components (a) and (b) is from 1 to 100 grams per are.

8. The method according to claim 6, wherein the component (b) is glyphosate, and the total amount of the components (a) and (b) is from 2 to 50 grams per are.

9. The method according to claim 6, wherein the component (b) is glufosinate, and the total amount of the components (a) and (b) is from 1 to 100 grams per are.

10. The method according to claim 6, wherein the component (b) is bialaphos, and the total amount of the components (a) and (b) is from 1 to 100 grams per are.

## Patentansprüche

1. Herbizidzusammensetzung, die als Wirkstoffe umfaßt (a) 3-Chlor-2-(4-chlor-2-fluor-5-propargyloxy-phenyl)-4,5,6,7-tetrahydro-2H-indazol und (b) wenigstens eine der Verbindungen N-(Phosphonomethyl)-glycin und seine Salze (Glyphosat), DL-Homoalanin-4-yl-(methyl)phosphinsäure und seine Salze (Glufosinat), 2-Amino-4-[(hydroxy)(methyl)phosphionyl]butyrylalanylalanin und seine Salze (Bialaphos) und einen inerten Träger oder Verdünnungsmittel.

2. Zusammensetzung nach Anspruch 1, wobei der Gewichtsanteil der Komponenten (a) und (b) von 1:0,1 bis 1:100 beträgt.

3. Zusammensetzung nach Anspruch 2, wobei die Komponente (b) Glyphosat ist und der Gewichtsanteil der Komponenten (a) und (b) von 1:0,25 bis 1:64 beträgt.

4. Zusammensetzung gemäß Anspruch 2, wobei die Komponente (b) Glufosinat ist und der Gewichtsanteil der Komponenten (a) und (b) von 1:0,2 bis 1:100 beträgt.

5. Zusammensetzung nach Anspruch 2, wobei die Komponente (b) Bialaphos ist und der Gewichtsanteil der Komponenten (a) und (b) von 1:0,2 bis 1:100 beträgt.

6. Verfahren zur Unkrautbekämpfung, das die Anwendung einer herbizid wirksamen Menge der Zusammensetzung nach Anspruch 1 auf das Unkraut umfaßt.

7. Verfahren nach Anspruch 6, wobei die Gesamtmenge der Komponenten (a) und (b) von 1 bis 100 g pro Ar beträgt.

8. Verfahren nach Anspruch 6, wobei die Komponente (b) Glyphosat ist und die Gesamtmenge der Komponenten (a) und (b) von 2 bis 50 g pro Ar beträgt.

9. Verfahren nach Anspruch 6, wobei die Komponente (b) Glufosinat ist und die Gesamtmenge der Komponenten (a) und (b) von 1 bis 100 g pro Ar beträgt.

10. Verfahren nach Anspruch 6, wobei die Komponente (b) Bialaphos ist und die Gesamtmenge der Komponenten (a) und (b) von 1 bis 100 g pro Ar beträgt.

## Revendications

1. Une composition herbicide qui comprend comme ingrédients actifs (a) le 3-chloro-2-(4-chloro-2-fluoro-5-propargyloxyphényl)-4,5,6,7-tétrahydro-2H-indazole et (b) au moins un composé choisi parmi la N-(phosphonométhyl)glycine et ses sels (glyphosate), l'acide *DL*-homoalanine-4-yl(méthyl)phosphinique et ses sels (glufosinate) et la 2-amino-4-[(hydroxy)(méthyl)phosphonyl]butyrylalanylalanine et ses sels (bialaphos) et un support ou diluant inerte.

2. La composition selon la revendication 1, dans laquelle la proportion pondérale des composants (a) et (b) est de 1:0,1 à 1:100.

3. La composition selon la revendication 2, dans laquelle le composant (b) est le glyphosate et la proportion pondérale des composants (a) et (b) est de 1:0,25 à 1:64.

4. La composition selon la revendication 2, dans laquelle le composant (b) est le glufosinate et la proportion pondérale des composants (a) et (b) est de 1:0,2 à 1:100.

5. La composition selon la revendication 2, dans laquelle le composant (b) est le bialaphos et la proportion pondérale des composants (a) et (b) est de 1:0,2 à 1:100.

6. Un procédé pour maîtriser les mauvaises herbes qui consiste à appliquer aux mauvaises herbes une quantité efficace comme herbicide de la composition selon la revendication 1.

7. Le procédé selon la revendication 6, dans lequel la quantité totale des composants (a) et (b) est de 1 à 100 g/a.

8. Le procédé selon la revendication 6, dans lequel le composant (b) est le glyphosate et la quantité totale des composants (a) et (b) est de 2 à 50 g/a.

9. Le procédé selon la revendication 6, dans lequel le composant (b) est le glufosinate et la quantité totale des composants (a) et (b) est de 1 à 100 g/a.

10. Un procédé selon la revendication 6, dans lequel le composant (b) est le bialaphos et la quantité totale des composants (a) et (b) est de 1 à 100 g/a.

Fig. 1

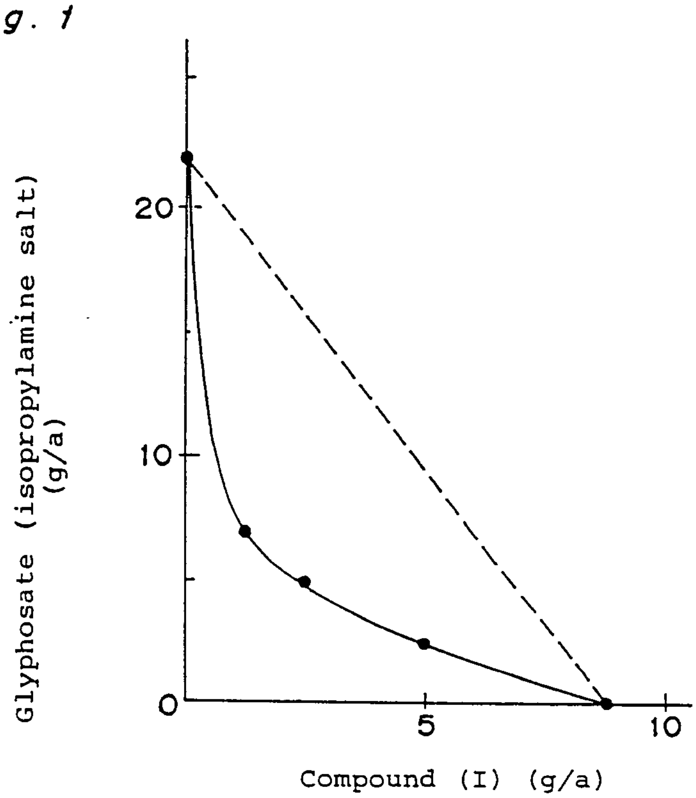
Glyphosate (isopropylamine salt) (g/a)
20
10
0
5
10
Compound (I) (g/a)

Fig. 2

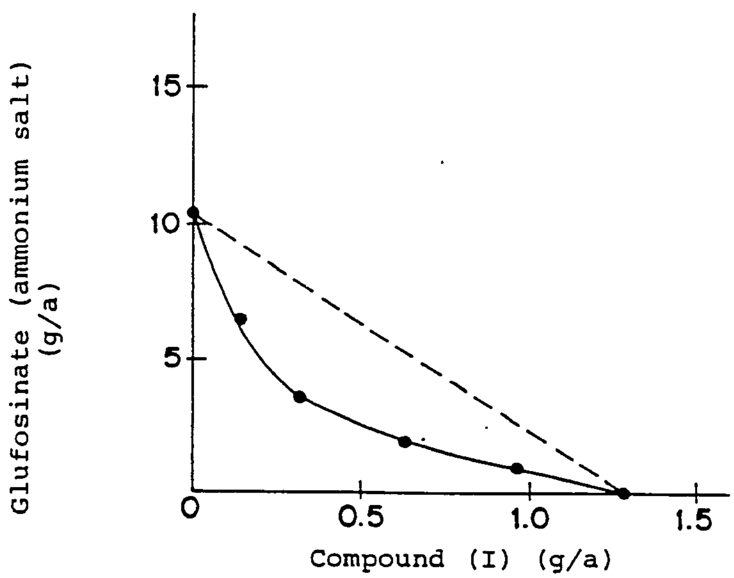
Glufosinate (ammonium salt) (g/a)
15
10
5
0
0.5
1.0
1.5
Compound (I) (g/a)

*Fig. 3*